# EUROPEAN PATENT APPLICATION

(11) **EP 4 817 802 A1**
(43) Date of publication of application: **07.10.2026**
(21) Application number: 26161851.6
(22) Date of filing: 03.03.2026
(51) Int. Cl.: B25H 1/16, B65G 39/02, B65G 13/12, F16C 29/12

(54) **SYSTEM FOR LIFTING AND MOVING A LOAD**

(30) Priority: 04.04.2025 IT 202500007221
(71) Applicant: RGPBALLS s.r.l., 20092 Cinisello Balsamo (MI) (IT)
(72) Inventor: Marfia, Riccardo, 22070 Bregnano (CO) (IT); Marchio, Alessandro, 21040 Venegono Superiore (VA) (IT)
(74) Representative: Praxi Intellectual Property Milano

(57) **Abstract**

The present invention relates to a a system for lifting and moving a load, comprising a plurality of lifting modules (100) longitudinally connected in succession, each module (100) comprising a support structure defining a support plane for the load, a lifting mechanism (27) comprising:
- a first wedge (26), configured to slide along a longitudinal direction of the module (100), between a retracted position and a protruded position;
- a second wedge (28), configured to slide vertically with respect to said first wedge (26), between a lowered position and a raised position, wherein the second wedge (28) is in the lowered position when the first wedge (26) is in the retracted position and in the raised position when the first wedge (26) is in the protruded position, or vice versa;
- a plurality of balls (24) associated with the second wedge (28), wherein each ball is translationally fixed and rotatable with respect to the second wedge (28), such that when the second wedge (28) is in the raised position, the plurality of balls (24) protrudes at least partially from the support plane (P) and when the second wedge (28) is in the lowered position, the plurality of balls (24) is recessed relative to the support plane (P).

## Description

### TECHNICAL FIELD

The present invention relates to a system for lifting and moving a load along a work surface. Specifically, the present invention relates to a modular lifting and moving system configured to allow for the facilitated translation of heavy and/or bulky loads. By way of example, the lifting and moving system according to the invention can be used in industrial production lines, automated handling systems, loading and unloading benches, as well as in logistics or manufacturing environments characterized by the need to move objects of various kinds by reducing friction with the work surface.

### STATE OF THE ART

Devices configured to facilitate the movement of objects or components along work surfaces are known in industrial handling and logistics. These include commonly used handling tables equipped with rollers or balls, which reduce friction between the load and the supporting surface. Such systems, although effective under certain operating conditions, have some drawbacks. For example, in roller or fixed ball devices, the rolling element is always exposed, making it difficult to stably secure the load once it is in place. This can lead to safety problems, particularly during assembly, machining or inspection operations.

To this end, devices designed to facilitate the movement of loads on work surfaces have been proposed using mechanisms that allow the raising and lowering of rolling elements, such as balls or rollers. As an example, document CN109292669 describes a handling system equipped with moving balls, whose lifting is achieved by a wedge mechanism. However, such known devices are not without drawbacks. In particular, they are generally made as monolithic structures, which makes their integration into pre-existing production lines and their versatility according to specific operational requirements complex.

### SUMMARY OF THE INVENTION

Thus, it is an object of the present invention is to provide a system for lifting and moving a load such that it overcomes, at least in part, the drawbacks and limitations mentioned above with reference to the prior art.

In particular, it is an object of the present invention is to provide a system for lifting and moving a load that is readily adaptable to specific requirements of the workspace in which it will be installed.

This and other objects are achieved by a system for lifting and moving a load according to claim 1.

The present invention, being characterized by a modular structure, allows a high degree of flexibility in configuration. In particular, thanks to the possibility of assembling and combining multiple modules along the longitudinal direction, the system can be easily and quickly adapted to the operational needs of various industrial applications, enabling rails of varying lengths to be built without requiring complex structural modifications. By placing several modular rails side by side, it is also possible to transform the configuration from a simple handling strip to an extended working and support surface, suitable for handling and supporting large or irregularly shaped loads.

With its modular design and unified control, the system of the present invention can also be easily integrated into existing production lines, reducing costs and installation time. Modularity also facilitates maintenance operations, as any damaged components can be replaced individually without compromising the entire system, thus reducing downtime and improving overall operational efficiency.

Dependent claims define possible advantageous embodiments of the invention.

### BRIEF DESCRIPTION OF THE DRAWINGS

To better understand the invention and appreciate its advantages, some of its non-limiting exemplary embodiments will be described below, referring to the appended figures, in which:
- figure 1 is an axonometric view of a load lifting and moving system according to an embodiment;
- figure 2A is an axonometric view of a module of the lifting and moving system in figure 1 in a first working configuration;
- figure 2B is an axonometric view of the lifting and moving system module in figure 1 in a second working configuration;
- figures 3A and 3B are sectional views, according to a longitudinal plane and orthogonal to a working plane P, of the lifting and moving system module in the configurations of figure 2A and 2B, respectively;
- figure 4 is a detail view of a section of the lifting and moving system module in figure 3B;
- figure 5 is a sectional view, according to a longitudinal plane parallel to the working plane P, of the lifting and moving system module in the configuration of figure 2A.

### DETAILED DESCRIPTION OF THE INVENTION

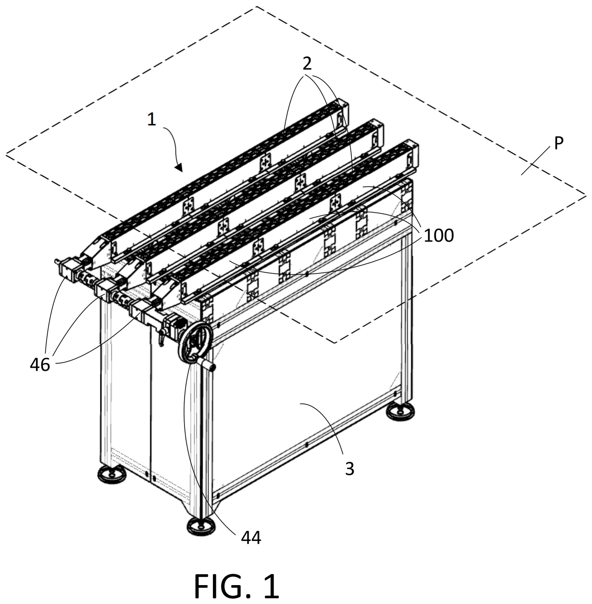

With reference to the attached **Figure 1****,** a system for lifting and moving a load is referred to overall as 1. System 1 comprises one or more rails 2, preferably parallel, each comprising a plurality of modules 100 (three modules for each rail in the variant in Figure 1) arranged successively in the longitudinal direction (i.e., in the main direction of rail development) and operationally connected to each other, as will be described in detail below. Parallel rails 2 define a working plane P on which loads (not shown in the figures) can rest to be moved by system 1 itself. System 1 may comprise, for example, a base 3 on which rails 2 can be placed.

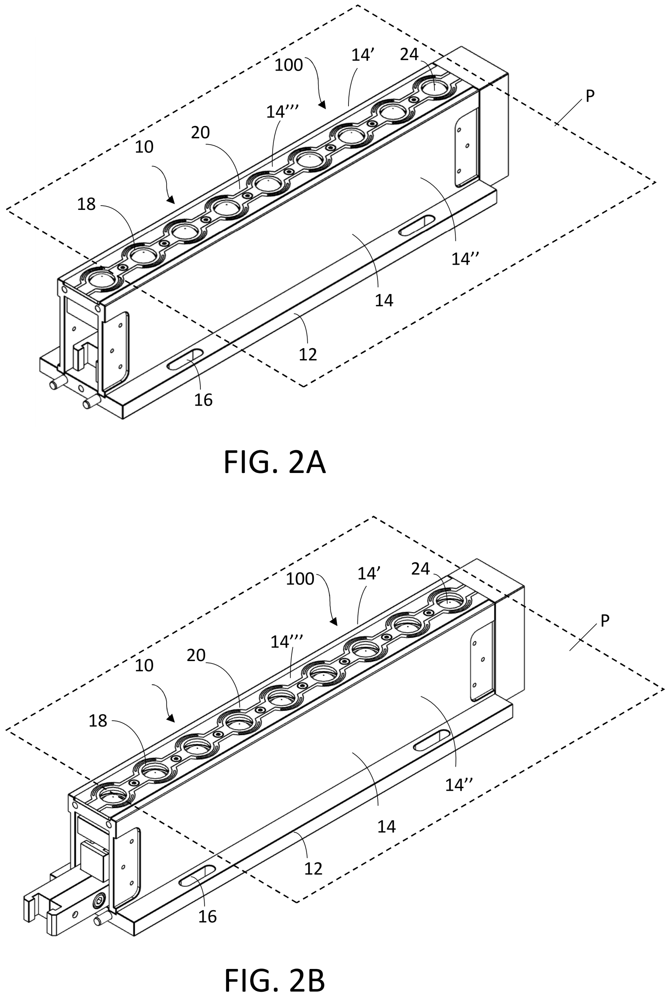

System 1 also comprises one or more actuators 44 for driving the modules of each rail in a synchronized manner. According to the embodiment shown in Figure 1, system 1 comprises a single manual actuator 44 (the operation of which will be described later). **Figures 2A through 5** illustrate a module 100 of each rail 2 of system 1 of lifting and moving a load according to a possible embodiment. The module 100 realizes a basic unit of the system 1 and is configured to be assembled in series with a plurality of modules 100 that are equal to each other in order to form one of the aforementioned rails 2, the length of which is variable depending on the number of modules connected in series longitudinally. Note that the module 100 of Figures 2A through 5 is a terminal module of each rail, i.e., positioned at a distal position of the rail, and for this purpose may comprise an end cap 48. However, such a module can be placed at any position on the rail by simply removing the end cover 48.

Each module 100 comprises a support structure 10, which develops longitudinally, and which comprises a support surface 20 intended to support the load, under certain operating conditions. When modules 100 are connected together, the support surfaces 20 of each module 100 of each rail 2 define the previously mentioned support surface P, which is common to all rails.

Preferably, the support structure 10 comprises a support base 12, which realizes the lower part of the module 100 and ensures the structural stability of the entire system 1. Advantageously, the support base 12 comprises means for attaching each module, and may, for example, be provided with a plurality of mounting slots 16, which allow the module 100 to be stably anchored, for example by means of connecting members not illustrated, to a support plane or structural frame, for example to the base 3.

The support structure 10 may further comprise, positioned above the support base 12 (with reference to the normal conditions of use of the module), a structural element 14 having preferably an inverted U-shaped conformation, which is developed longitudinally along the length of the module 100.

Support structure 10, support base 12 and structural element 14, depending on the conditions of use, can be made of different materials, such as plastic materials or metal alloys, such as steel or aluminum alloys. In case of special requirements, such as in the presence of corrosive or saline agents, they can be made of stainless steel.

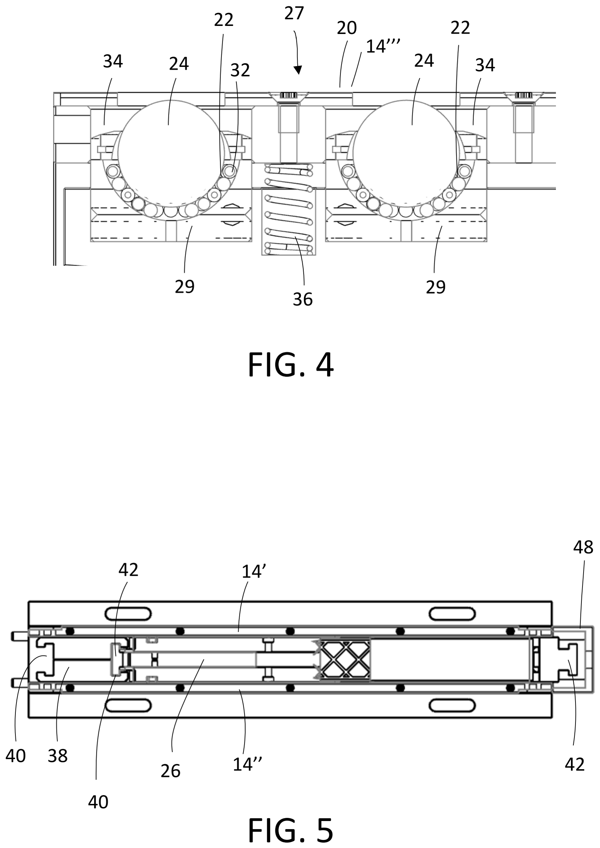

Such a structural element 14 may comprise an upper wall 14‴ and two opposite vertical side walls 14' and 14", extending toward the support base 12 from the upper wall 14‴, which is preferably horizontal. The top wall 14‴ comprises the support surface 20 and ensures the structural rigidity of the module 100 along its longitudinal extension. Advantageously, the top wall 14‴ comprises a plurality of preferably circular openings 18, still more preferably arranged aligned along the longitudinal direction of the module 100, and configured to provide access to a plurality of housing seats 22 (illustrated in detail in **Figure** 4), which accommodate a plurality of respective balls 24 rotatably movable therein.

The balls 24, when brought to a specific position partially raised from the support plane P (in a manner that will be described in more detail below), realize supporting elements for the load to be moved. Therefore, as will become clear to the skilled person, the above configuration, due to the rolling of the balls 24 in the housing seats 22, makes it possible to reduce the friction that is opposed to the load during its movements along the rails, facilitating its handling. The balls 24 are advantageously made of a material with high mechanical strength, such as ceramic, or steel, or stainless steel, e.g., stainless steel 420. In other embodiments, the balls 24 can also be made of a plastic material.

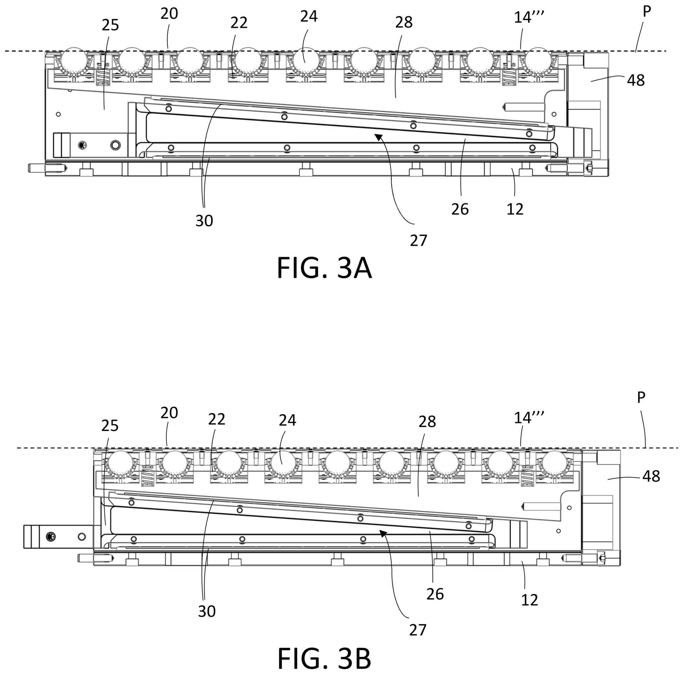

The above situation is depicted for example in **Figure 2A** **and** **3A****.**

Conversely, according to the configuration depicted in **Figure 2B** **and** **3B****,** the balls 24 result in a completely lowered position relative to the support surface 20 and thus to the support plane P, thus allowing direct, high-friction contact between the load and the support surfaces 20 of all modules of all rails.

An advantage of system 1 is thus the possibility of alternating, between the load and the support surfaces, a low-friction contact (for load movements) and a stable high-friction contact (for load positioning), depending on the operational phases.

Referring again to **Figures 3A and 3B****,** the support structure 10, particularly the structural element 14 shaped as an inverted U, delimits an internal seat 25 in which a mechanism 27 for lifting the balls 24 is housed, comprising a first wedge 26 and a second wedge 28. Specifically, the first wedge 26 is configured to slide along the longitudinal direction of the module 100, e.g., by creeping on the support base 12, between a protracted position **(****Figures 2A** **and** **3A****)** and a retracted position **(****Figures 2B** **and** **3B****),** while the second wedge 28 is configured to translate vertically (i.e., perpendicular to the support plane P), by sliding relative to said first wedge 26, between a lowered position and a raised position, so that the second wedge 28 is in the lowered position when the first wedge 26 is in the retracted position and the second wedge 28 is in the raised position when the first wedge 26 is in the protracted position, or vice versa.

To promote mutual sliding between the first wedge 26 and the second wedge 28 and between the first wedge 26 and the support base 12, the lifting mechanism 27 may additionally comprise one or more plates 30 made of a material with a low coefficient of friction, such as made of Turcite^{®} or similar material. In the embodiment shown in Figures 3A and 3B, a first of the plates 30 is interposed between the first wedge 26 and the second wedge 28, and a second of the plates 30 is interposed between the first wedge 26 and the support base 12, thus reducing friction during translation and lifting.

The first wedge 26 and second wedge 28 are advantageously made of materials with high mechanical strength, preferably metal alloys, such as steel or stainless steel or aluminum alloys. As an example, they can be made of 39NiCrMo3 steel, or aluminum alloys such as Anticorodal or Ergal in order to ensure high operational durability. According to an embodiment, the second wedge 28 is made of a material with a lower specific weight than the first wedge 26, in such a way that its total weight, which burdens the first wedge 26, is limited.

In the exemplary embodiment shown in **Figures 3A and 3B****,** the first wedge 26 is made in one piece. According to a possible variant not illustrated in the figures, the first wedge 26 is made in multiple parts, such as three parts, distinct and interconnected, in order to facilitate assembly and maintenance operations. This subdivision allows the first wedge 26 to be progressively assembled along the length of module 100 and to intervene on specific segments in case of localized wear or damage.

Advantageously, the previously mentioned plurality of housing seats 22 to accommodate the plurality of balls 24 is associated with the second wedge 28. In this way, when the second wedge 28 is in the raised position, each ball 24 protrudes at least partially from the support plane P, whereas, when the second wedge 28 is in the lowered position, each ball 24 is in a recessed position relative to the support plane P.

Therefore, when the balls 24 are in the lowered position, the load is stably supported by the support surface 20 of the module 100 without contacting the balls 24, whereas, when the balls 24 are in the raised position, the load is in contact with them, facilitating load moving.

**Figure 4** illustrates a detail of the lifting mechanism 27. Preferably, each housing seat 22 of the balls 24 associated with the second wedge 28 comprises a plurality of rolling bodies, e.g., free balls 32, interposed between the respective ball 24 and the housing seat 22, which allow the rotation of the ball 24 in the housing 22 and thus with respect to the second wedge 28. Free balls 32 can, for example, be made of one of the materials previously mentioned with reference to balls 24. According to an embodiment, each housing seat 24 further comprises a retaining ring 34 configured to keep the respective ball 24 within the housing seat 22 and prevent the plurality of free balls 32 from escaping from the housing seat 22. According to an embodiment, each housing seat 22 is formed in a respective housing body 29 attached to the second wedge 28. The retaining ring 34 can be connected to the housing body 29. Housing body 29 and retaining ring 34 are advantageously made of materials with high mechanical strength, such as ceramic or steel, such as galvanized steel or stainless steel, for example stainless steel 420. According to an embodiment, they can also be made of plastic materials.

**Figure 4** further shows a possible conformation of the housing seat 22, configured to allow the respective ball 24 to roll when it is in contact with the load.

The lifting mechanism 27 also comprises elastic contrast means 36, configured to urge the second wedge 28 toward the lowered position, that is, to oppose its movement from the lowered to the raised position. Said elastic contrast means 36 may comprise, for example, coil springs interposed between the second wedge 28 and the structural element 14, particularly at its top wall 14"'. Said elastic contrast means 36 are configured to compress during the lifting phase of the second wedge 28, preventing abrupt impacts, and to draw the second wedge 28 downward during the lowering phase, ensuring a smooth return of the balls 24 to their retracted position.

Advantageously, as visible, for example, in the embodiment shown in **Figure 5****,** each module 100, particularly the first wedge 26 of each module, comprises at least one connecting element 38 configured to realize a coupling integral in translation, and preferably also in rotation, between the first wedges 26 of longitudinally contiguous modules 100 to form a respective rail. According to an embodiment, such a connecting element 38 comprises two opposing, preferably mutually equal, connecting seats 40 suitable for coupling, realizing a shape connection, with corresponding, complementaryshaped connecting portions 42 located at two longitudinally opposite ends of each first wedge 26.

According to a particularly advantageous embodiment, the connecting seats 40 of the connecting element 38 and the corresponding connecting portions 42 of the first wedge 26 have dovetail conformation, which enables the realization of an integral connection in both translation and rotation between the first wedges 26 of two successive modules 100, ensuring synchronized movement of all the first wedges of the successive modules composing a single rail.

The movement of the wedges and, consequently, the raising and lowering of the balls of each module, can be carried out with different modes of actuation, depending on operational requirements.

In an embodiment not shown in the figures, system 1 comprises respective actuators 44 connected to each rail, which are synchronized with each other in order to ensure coordinated action of all wedges and thus all balls of each module of each rail. The synchronization of the separate actuators can be achieved by an appropriate control system.

In a further embodiment, system 1 comprises a single actuator 44 connected to all rails (see, for example, **Figure 1**), either directly or by means of an appropriate transmission 46, such that said single actuator alone is capable of simultaneously and synchronously moving the wedges and balls of all connected modules 100. An advantage of this embodiment is that it allows the overall number of actuators 44 to be reduced, simplifying the management and control of the entire system 1.

Note that the connection of the actuators or transmission to the first wedge of each rail can be done in a similar manner as described with reference to the connection of the first wedges of subsequent modules. In particular, the actuator or transmission may comprise an appropriate connecting seat that can be coupled to the initial connecting portion 42 of the first wedge of the first module of the rail.

It should also be noted that, in the case of rotating actuators (e.g., in the case of electric actuators), the transmission may comprise suitable means of converting the motion from rotating to linear (e.g., via worm screws or the like) and/or suitable means of reduction. Actuator 44 can be chosen from a variety of actuator types, selected from the group consisting of:
- manual actuator (as shown in **Figure 1**);
- electric actuator;
- pneumatic actuator;
- hydraulic actuator.

Therefore, the lifting and moving system according to the invention provides operational flexibility due to its adaptability to different automation and control needs. In fact, in the case where each rail is equipped with actuators synchronized with each other, independent control of each rail can possibly be achieved, allowing the balls of only some of the rails to be moved, for example, with small loads.

Conversely, the use of a single actuator for all rails realizes a simplification of the control system as a whole and thus of its maintenance, resulting in reduced costs and infrastructure complexity.

In both cases, the ability to select the actuator from different drive technologies (manual, electric, pneumatic, or hydraulic) ensures optimal integration in different industrial environments, making the system versatile and scalable.

From the above description, the person skilled in the art can appreciate how the system for lifting and moving a load according to the present invention, by offering a modular configuration, ensures adequate operational flexibility and easy integration in different industrial settings.

In particular, the system of the present invention allows multiple modules to be assembled in series, creating rails of varying lengths or working surfaces that are more or less extensive depending on the number of rails side by side. This modularity allows the system to be adapted without complex structural changes, making it suitable for industrial, logistics and manufacturing applications where loads of different shapes and sizes need to be handled.

In addition, the ability to operate the entire system synchronously through a single actuator simplifies management and system costs. In any case, the system can also be configured with multiple synchronized actuators, providing an adaptable solution to different operational needs.

In addition, the modularity of the system according to the invention allows individual modules to be repaired or replaced without having to work on the entire system, minimizing downtime and improving overall operational efficiency.

To the described embodiments of the system for lifting and moving a load according to the invention, the skilled person, in order to meet specific contingent needs, may make numerous additions, modifications, or substitutions of elements with functionally equivalent ones, without, however, departing from the scope of the appended claims.

## Claims

1. A system (1) for lifting and moving a load, comprising:
- one or more rails (2), each rail comprising a plurality of lifting modules (100) longitudinally connected in succession, each module (100) comprising:
- a support structure (10) defining a support plane (P) for the load;
- a lifting mechanism (27) comprising:
- a first wedge (26), configured to slide along a longitudinal direction of the module (100), between a retracted position and a protruded position;
- a second wedge (28), configured to slide vertically with respect to said first wedge (26), between a lowered position and a raised position;
wherein the second wedge (28) is in the lowered position when the first wedge (26) is in the retracted position and in the raised position when the first wedge (26) is in the protruded position, or vice versa;
- a plurality of balls (24) associated with the second wedge (28), wherein each ball is translationally fixed and rotatable with respect to the second wedge (28), such that:
when the second wedge (28) is in the raised position, the plurality of balls (24) protrudes at least partially from the support plane (P);
when the second wedge (28) is in the lowered position, the plurality of balls (24) is recessed relative to the support plane (P); - elastic contrast means (36), configured to urge the second wedge (28) towards the lowered position;
- at least one actuator (44) for actuating the lifting mechanisms (27) of the modules (100);
wherein the first wedges (26) of each module (100) of each rail (2) are integrally connected to move synchronously between their respective protruded and retracted positions.

2. The system (1) for lifting and moving a load according to the preceding claim, wherein the second wedge (28) comprises a plurality of seats (22) for housing the plurality of balls (24), each housing seat (22) comprising:
- a plurality of free rolling bodies (32), interposed between the respective ball (24) and the housing seat (22), to allow the ball (24) to roll with respect to the second wedge (28); and
- a retaining ring (34), configured to retain the respective ball (24) within the housing seat (22) and to prevent the free rolling bodies (32) from exiting the housing seat (22).

3. The system (1) for lifting and moving a load according to any one of the preceding claims, wherein the support structure (10) of each module (100) comprises:
- a support base (12);
- a structural element (14) shaped as an inverted U and arranged on the support base (12).

4. The system (1) for lifting and moving a load according to claim 3, wherein said structural element (14) shaped as an inverted U comprises a plurality of circular openings (18) for accessing the housing seats (22) of the balls (24).

5. The system (1) for lifting and moving a load according to any one of the preceding claims, wherein the lifting mechanism (27) further comprises one or more low-friction coefficient plates (30), interposed between the first wedge (26) and the support base (12) and/or between the first wedge (26) and the second wedge (28).

6. The system (1) for lifting and moving a load according to any one of claims 1 to 5, wherein the first wedge (26) is made as a single piece.

7. The system (1) for lifting and moving a load according to any one of claims 1 to 5, wherein the first wedge (26) comprises three separate and connected pieces.

8. The system (1) for lifting and moving a load according to any one of the preceding claims, further comprising one or more elements (38) for connecting the first wedges (26) of successive modules (100) of the same rail (2);
wherein each of said connecting elements (38) comprises two opposite connection seats (40), and said first wedges (26) comprise two opposite connection portions (40, 42) having a shape complementary to the connection seats (40) and adapted to fit therein, such that each connecting element (38) establishes a translationally integral shape coupling between the first wedges (26) of two successive modules (100).

9. The system (1) for lifting and moving a load according to claim 8, wherein said connection seats (40) have a dovetail shape, so as to establish a connection that is integral in both translation and rotation between the first wedges (26) of two successive modules (100).

10. The system (1) for lifting and moving a load according to any one of claims 1 to 9, comprising respective actuators (44) connected to each rail (2), wherein said actuators (44) are mutually synchronized.

11. The system (1) for lifting and moving a load according to any one of claims 1 to 9, comprising a single actuator (44) connected to all the rails (2).

12. The system (1) for lifting and moving a load according to any one of the preceding claims, wherein the at least one actuator (44) is selected from the group consisting of:
- a manual actuator;
- an electric actuator;
- a pneumatic actuator;
- a hydraulic actuator.
